# EUROPEAN PATENT SPECIFICATION

(11) **EP 3 459 648 B1**
(45) Date of publication and mention of the grant of the patent: **11.08.2021**
(21) Application number: 18152027.1
(22) Date of filing: 17.01.2018
(51) Int. Cl.: B09B 3/00, B65G 33/08, B65F 3/22, F26B 9/08

(54) **FOOD WASTE TREATING APPARATUSES WITH FOOD WASTE CONVEYING SYSTEM**
VORRICHTUNGEN ZUR BEHANDLUNG VON LEBENSMITTELABFÄLLEN MIT LEBENSMITTELABFALLFÖRDERSYSTEM
APPAREILS DE TRAITEMENT DE DÉCHETS ALIMENTAIRES AVEC SYSTÈME DE TRANSPORT DE DÉCHETS ALIMENTAIRES

(30) Priority: 25.09.2017 US 201715713725
(43) Date of publication of application: 27.03.2019
(73) Proprietor: Koh, James Chun, Fort Lee, NJ 07024 (US)
(72) Inventor: Koh, James Chun, Fort Lee, NJ 07024 (US)
(74) Representative: Isarpatent

(56) References cited:
- GB-A- 2 519 052
- US-A1- 2008 210 790
- US-A1- 2013 171 725
- US-B1- 9 393 545

## Description

### TECHNICAL FIELD

The present disclosure relates to a food waste treating apparatus with food waste conveying system.

### BACKGROUND

In general, organic wastes such as food waste contain high contents of protein, carbohydrate, and calcium as well as animal leftover and vegetable fibers. If they are not fully decomposed and buried, extracts from the organic wastes may flow into the ground and then contaminate groundwater or the like. Therefore, apparatuses for treating food waste have been commonly used for treating food waste.

In this regard, U.S. Patent No. 9393545 (entitled "Food waste treating apparatus") was previously presented.

In the disclosed food waste treating apparatus, a motor is connected to deliver the power using a chain at only one end of a rotating shaft to mix the food waste inside.

To compensate the excessive torque generated structurally at the one end of the rotating shaft, two bearings alongside a chain sprocket were previously provided.

However, even the suggested method disclosed in previous reference may be applicable to a certain type of food waste treating apparatus, there needs a different approach to enhance the stability of the power transferring system as the length of a rotating shaft is increased to treat a large amount of food waste. The previously presented method is limited in solving a torque issue applied to the rotating shaft and an alignment problem caused thereby when a motor is driven.

Moreover, as the size of the apparatus of treating food waste becomes bigger to handle large amounts of food waste, the access to the apparatus of treating food waste to input waste is not feasible by human height and there needs a food waste conveying system to deliver food waste from the ground to the apparatus of treating food waste.

GB 2,519,052 A describes a waste disposal apparatus, in particular a waste disposal apparatus for disposing of food waste using aerobic decomposition. A stirrer for stirring waste materials in a decomposition chamber, and a drive mechanism for driving the stirrer are described. GB 2,519,052 A describes a horizontal shaft to which paddles are attached by arms. Rotary drive is transmitted from a motor through a gearbox, a drive chain and a drive sprocket, the drive sprocket being attached to a drive end of the shaft via a torque limiter.

US 2008/0210790 A1 deals with a food waste disposal apparatus and describes a rotational shaft installed in a mixing basin along a horizontal central line. A plurality of blade support bars, installed on the rotational shaft, each blade support bar being provided with a mixing blade, is described. A first end of the rotational shaft is engaged with a sprocket.

Furthermore, US 2013/0171725 A1 describes a garbage separating apparatus and a food waste disposal system.

### SUMMARY

In view of the foregoing, the present disclosure provides an apparatus for treating a large amount of food waste and food waste conveying system therein to resolve the issue when the size of the apparatus of treating food waste becomes larger to decompose large amount of food wastes. According to the present invention, a food waste treating apparatus comprising the features of claim 1 and a food waste conveying system comprising the features of claim 9 are provided.

However, problems to be solved by the present disclosure are not limited to the above-described problems. There may be other problems to be solved by the present disclosure.

According to a first aspect of the present disclosure, a food waste treating apparatus includes: a housing including a food inlet opening on its upper surface; and a rotating shaft assembly provided within the housing and configured to mix food waste within the housing. The rotating shaft assembly includes: a rotating shaft; a plurality of supporting bars evenly attached and extended from the rotating shaft in perpendicular direction to the rotating shaft; a plurality of agitating blades provided at each end of the plurality of supporting bars; a motor configured to supply torque to rotate the rotating shaft; and a torque transferring structure connected to both ends of the rotating shaft and configured to transfer torque from the motor.

According to a second aspect of the present disclosure, the food waste treating apparatus includes a food waste crusher configured to break food waste into small pieces; and a plurality of screw conveyors configured to transport shredded food waste into the food waste treating apparatus.

According to an exemplary embodiment of the present disclosure, the structural stability and durability of the food waste treating apparatus is enhanced by transferring torque from the motor to both ends of the rotating shaft.

Further, according to an exemplary embodiment of the present disclosure, the large amount of food waste can be delivered into the apparatus of treating food waste with the use of the food waste crusher and the plurality of screw conveyers.

### BRIEF DESCRIPTION OF THE DRAWINGS

In the detailed description that follows, embodiments are described as illustrations only since various changes and modifications will become apparent to those skilled in the art from the following detailed description. The use of the same reference numbers in different figures indicates similar or identical items.
**FIG. 1** is a front view of a food waste treating apparatus in accordance with an exemplary embodiment of the present disclosure.
**FIG. 2** is a side view of the food waste treating apparatus in accordance with an exemplary embodiment of the present disclosure.
**FIG. 3** is a front view of a rotating shaft assembly in accordance with an exemplary embodiment of the present disclosure.
**FIG. 4** is a plan view of the rotating shaft assembly in accordance with an exemplary embodiment of the present disclosure.
**FIG. 5** is a front view of a system for treating food waste in accordance with an exemplary embodiment of the present disclosure.
**FIG. 6** is a plan view of the system for treating food waste in accordance with an exemplary embodiment of the present disclosure.
**FIG. 7** is a diagram provided to explain a food waste crusher and screw conveyors in accordance with an exemplary embodiment of the present disclosure.
**FIG. 8** is a diagram provided to explain a crushing unit in accordance with an exemplary embodiment of the present disclosure.

### DETAILED DESCRIPTION

Hereinafter, embodiments of the present disclosure will be described in detail with reference to the accompanying drawings so that the present disclosure may be readily implemented by those skilled in the art. However, it is to be noted that the present disclosure is not limited to the embodiments but can be embodied in various other ways. In drawings, parts irrelevant to the description are omitted for the simplicity of explanation, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element.

Through the whole document, the term "on" that is used to designate a position of one element with respect to another element includes both a case that the one element is adjacent to the another element and a case that any other element exists between these two elements.

The present disclosure relates to a food waste treating apparatus with a food waste conveying system.

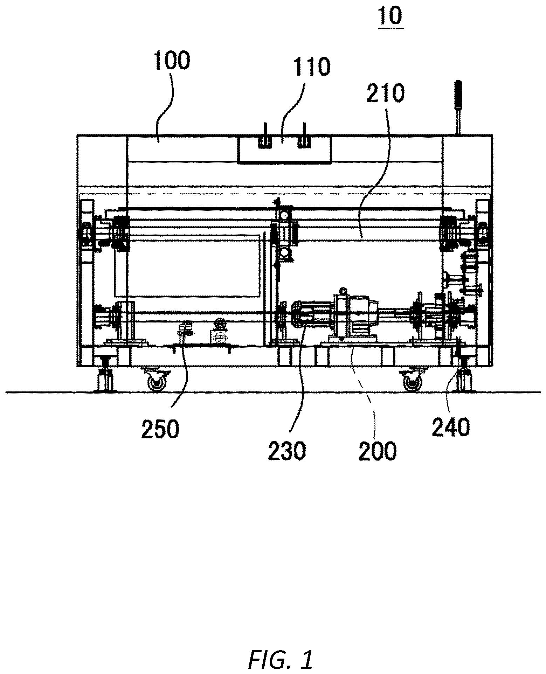

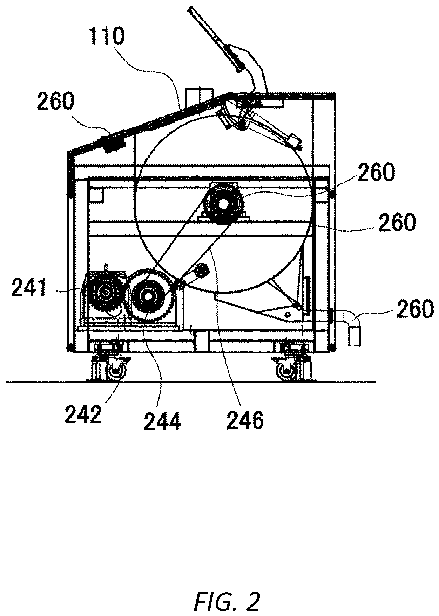

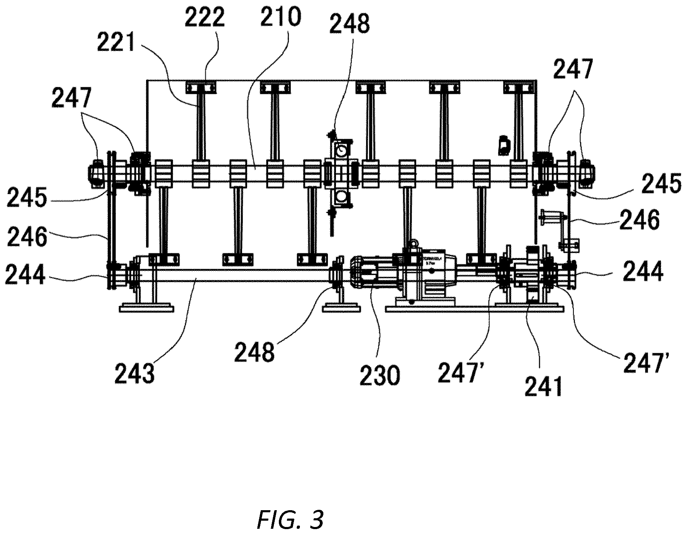

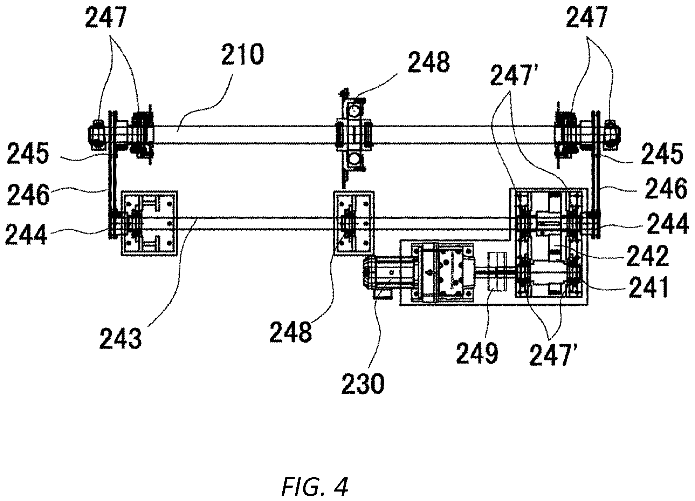

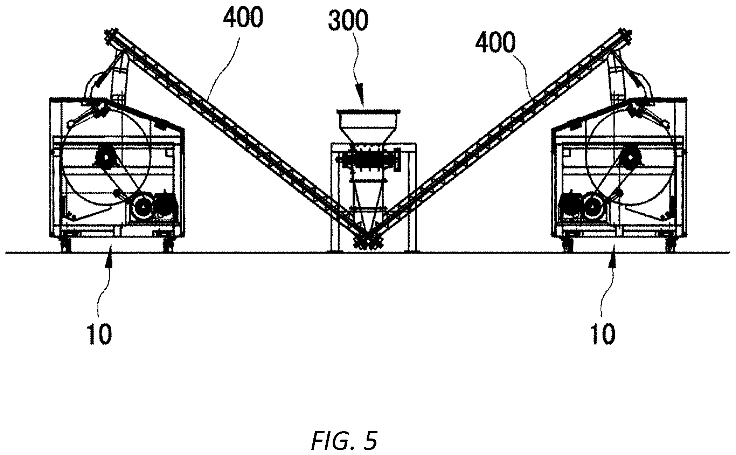

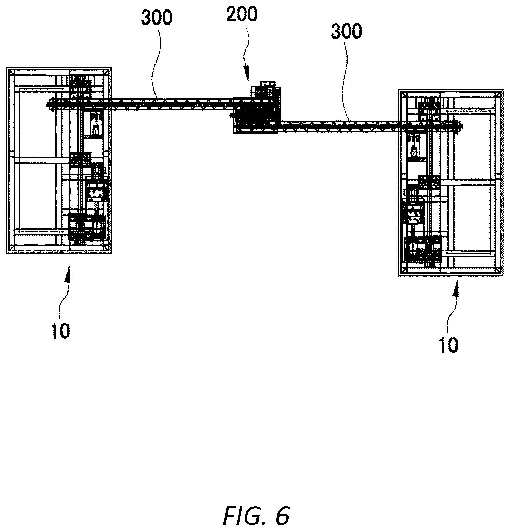

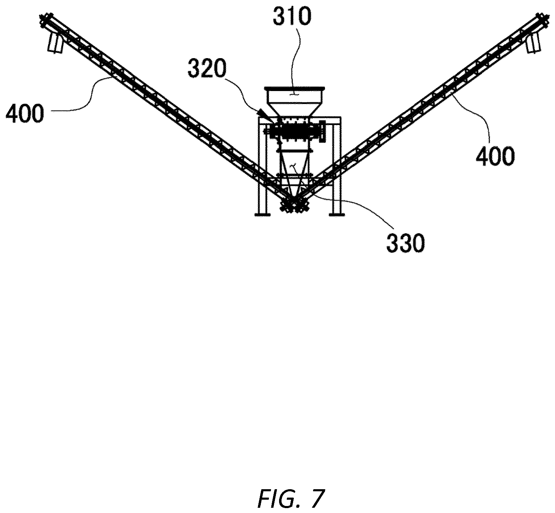

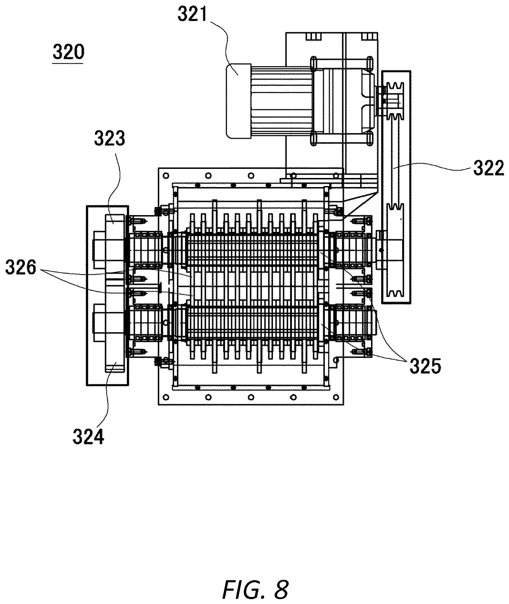

**FIG. 1** is a front view of a food waste treating apparatus in accordance with an exemplary embodiment of the present disclosure, **FIG. 2** is a side view of the food waste treating apparatus in accordance with an exemplary embodiment of the present disclosure, **FIG. 3** is a front view of a rotating shaft assembly in accordance with an exemplary embodiment of the present disclosure, **FIG. 4** is a plan view of the rotating shaft assembly in accordance with an exemplary embodiment of the present disclosure, **FIG. 5** is a front view of a system for treating food waste in accordance with an exemplary embodiment of the present disclosure, **FIG. 6** is a plan view of the system for treating food waste in accordance with an exemplary embodiment of the present disclosure, **FIG. 7** is a diagram provided to explain a food waste crusher and screw conveyors in accordance with an exemplary embodiment of the present disclosure, and **FIG. 8** is a diagram provided to explain a crushing unit in accordance with an exemplary embodiment of the present disclosure.

Firstly, a food waste treating apparatus 10 in accordance with an exemplary embodiment of the present disclosure will be described with reference to **FIG. 1** and **FIG. 2****.**

The food waste treating apparatus 10 includes a housing 100 including a food inlet opening 110 on its upper surface and a rotating shaft assembly 200 provided within the housing 100 and configured to move food waste within the housing 100.

For example, in the food waste treating apparatus 10, food waste may be put into the housing 100 through the food inlet opening 110. Further, the food waste put into the housing 100 may be stirred by the rotating shaft assembly 200 and decomposed by microorganisms or degrading agents.

Referring to **FIG. 2****,** the housing 100 may include a mixing barrel 120 in which food through the food inlet opening 110 is collected. Further, the rotating shaft assembly 200 may be provided within the mixing barrel 120.

Hereinafter, the rotating shaft assembly 200 of the present disclosure will be described with reference to **FIG. 3** and **FIG. 4****.**

The rotating shaft assembly 200 includes a rotating shaft 210, a plurality of supporting bars 221 evenly attached and extended from the rotating shaft 210 in perpendicular direction to the rotating shaft 210, a plurality of agitating blades 222 provided at each ends of the plurality of supporting bars 221, a motor 230 configured to supply torque to rotate the rotating shaft 210, and a torque transferring structure 240 connected to both ends of the rotating shaft 210 and configured to transfer torque from the motor 230.

Food waste is mixed and decomposed inside the mixing barrel by the rotation of the plurality of supporting bars 221 and the plurality of agitating blades 222 simultaneously and thus can be prevented from being accumulated to one-side inside the housing 100. For example, the plurality of agitating blades 222 may be clamped to the plurality of supporting bars 221 respectively by clamping elements such as bolts. Further, in the food waste treating apparatus 10, instead of using the clamping elements, the plurality of agitating blades 222 and the plurality of supporting bars 221 may be formed using casting molds, and, thus, its structural durability may be increased.

In case of overloading to the motor 230 caused by abnormal operation or the content of food waste, the rotating shaft 210 may be designed to rotate reversely at a predetermined angle to release any blockage in normal rotating direction. For example, if the larger amount of food waste than desired input is inserted to the housing 100, the plurality of agitating blades 222 undergoes overloading then excessive torque because of it causes damage to the motor 230 configured to supply torque though the rotating shaft 210, the plurality of supporting bars 221 and the plurality of agitating blades 222.

As such, if an excessive load is detected in the motor 230, an inverter (not illustrated) in the electric circuit catches the load, then the rotating shaft 210 may be rotated reversely at a predetermined angle. Accordingly, the plurality of supporting bars 221 and the plurality of agitating blades 222 may be rotated reversely, being released from any blockage. This reverse action of the rotating shaft assembly 200 prevents the motor 230 from any damage. Further, if such abnormal situation occurs at the rotating shaft assembly 200, an alarm message may be recorded and displayed on a touch screen 260 which will be described later. A user may check the current state of the rotating shaft assembly 200 through the alarm message on the touch screen and take an action accordingly.

Referring to **FIG. 4****,** the torque transferring structure 240 may include a first sprocket 241 attached to a motor shaft 230, a second sprocket 242 linked with the first sprocket 241, a driving shaft 243 where the second sprocket 242 is attached, driving sprockets 244 attached at both ends of the driving shaft 243 respectively, and rotating shaft sprockets 245 linked with the driving sprockets 244 and attached at both ends of the rotating shaft 210 respectively.

Therefore, when the motor 230 rotates the first sprocket 241, the second sprocket 242 may be rotated simultaneously. When the second sprocket 242 is rotated, the driving shaft 243 and the driving sprockets 244 attached at the both ends of the driving shaft 243 may be rotated simultaneously. When the driving sprockets 244 are rotated, the rotating shaft sprockets 245 and the rotating shaft assembly 200 including the rotating shaft 210, the plurality of supporting bars 221 and the plurality of agitating blades 222 may be rotated simultaneously.

In other words, the food waste treating apparatus 10 disclosed in the present invention may transmit rotatory power from the motor 230 to the both ends of the rotating shaft assembly 200 through driving sprockets 244 attached at the both ends of the driving shaft 243 respectively. The configuration of balanced transferring torque presented in this embodiment, therefore, provides the prevention of distortion and alignment issue of the rotating shaft 210 caused when transferring torque from the motor to the only one side of the rotating shaft 210. and increase the structural stability of the system.

The driving sprocket 244 and the rotating shaft sprocket 245 may be linked with each other by a chain 246. Specifically, the food waste treating apparatus 10 may include the closed-figure-shaped chain 246 provided passing through a part of an outer circumference of the rotating shaft sprocket 245 and a part of an outer periphery of the driving sprocket 244, and thus, the rotating shaft sprocket 245 and the driving sprocket 244 may be rotated simultaneously.

Referring to **FIG. 3**, the torque transferring structure 240 may include a plurality of bearings 247 located alongside the rotating shaft sprocket 245. This configuration enables to prevent the damage to the rotating shaft 210 and the torque transferring structure 240.

For example, the plurality of bearings 247 may be provided at each end of the rotating shaft 210. More specifically, two bearings 247 at one end of the rotating shaft 210 may be provided at both sides of the rotating shaft sprocket 245. Furthermore, the plurality of bearings 247' may be provided at both sides of the first sprocket 241 and the second sprocket 242. In other words, the plurality of bearings 247 and 247' may be provided at both sides of the rotating shaft sprocket 245, the first sprocket 241 and the second sprocket 242 respectively, securing its structural stability.

The torque transferring structure 240 may further include a supporting unit 248 configured to support the rotating shaft 210 and the driving shaft 243 respectively. In other words, in the food waste treating apparatus 10, when a large amount of food waste is processed, the length of the rotating shaft 210 and the driving shaft 243 are normally increased. When torque is applied to the lengthy shafts, bending or distortion caused by torque may occur. The supporting unit 248 provided at the central location of the rotating shaft 210 and the driving shaft 243 respectively reduces this problem. For example, the supporting unit 248 may include bearings to set the rotating shaft 210 and the driving shaft 243 in place without interfering rotation of the rotation of the rotating shaft 210 and the driving shaft 243 respectively.

Referring to **FIG. 4****,** the torque transferring structure 240 may further include a coupling 249 configured to connect the motor 230 and the first sprocket 241. In other words, the coupling 249 is connected to the motor 230 and the first sprocket 241 to transmit torque, and may be configured to reduce any misalignment error between the motor 230 and the first sprocket 241. Further, if an unexpected excessive load is caused during the operation of the food waste treating apparatus 10, the coupling 249 may be broken and the motor 230 and the first sprocket 241 may be disconnected, resulting in the motor 230 and the entire apparatus to be protected.

As described above, food waste through the food waste treating apparatus 10 may be decomposed by microorganisms or degradable agents inside the mixing barrel 120. Further, referring to **FIG. 2**, decomposed food waste may be discharged through a plurality of drain hole 130.

In other words, the food waste discharged through the plurality of drain hole 130 may be sent to and collected in a washing room, and decomposed food waste collected in the washing room may be discharged to an outside sewage system or the like through a drain pipe. Likewise, when the decomposition process of food waste is finished, decomposed food waste may be discharged to the outside of the housing 100 through a discharging hole or discharging apparatus.

Referring to **FIG. 1****,** the food waste treating apparatus 10 may further include a load cell 250 provided at a lower end of the housing 100 to measure the weight of food waste input to the housing 100.

Herein, the weight of food waste inserted to the housing 100 may refer to one or more of the amount of food waste put into the housing 100 and the amount of food waste stored in the housing 100. Further, the weight of food waste measured by the load cell 250 may be displayed on the touch screen 260 to be described below.

Referring to **FIG. 2****,** the food waste treating apparatus 10 may further include the touch screen 260 provided on an outer surface of the housing 100 and configured to display multiple operation modes and status, enabling a user to select and run one of the operation modes displayed thereon.

More specifically, multiple operation modes and status may be displayed on the touch screen 260, and the user can select one of the modes through the touch screen 260. For example, the touch screen 260 may display the amount of food waste processed, the amount of water used, and the amount of electric power used. Further, the touch screen 260 may display and record data logs relevant to the operation of the food waste treating apparatus 10 daily, weekly, and monthly.

Furthermore, the touch screen 260 may provide the input amount of food waste through the data from the load cell 250. In case of food waste being excessively inserted more than the daily processing capacity of the system, the touch screen 260 may display warning and proper instructional messages to the user.

The food waste treating apparatus 10 may supply warm water to the mixing barrel 120 and a trace heater may be provided on an outer surface of the mixing barrel 120. The control of the temperature inside the mixing barrel 120 enables microorganism to maximize the decomposition process.

Hereinafter, a food waste conveying system in accordance with an exemplary embodiment of the present disclosure will be described with reference to **FIG. 5** to **FIG. 8****.**

The food waste conveying system includes a food waste crusher 300 configured to break food waste in small pieces, a plurality of food waste treating apparatuses 10, and a plurality of screw conveyors 400 configured to deliver shredded food waste through the food waste crusher 300 to the plurality of food waste treating apparatuses 10. The embodiment of the food waste conveying system may deliver shredded food waste to two food waste treating apparatuses 10 as illustrated in **FIG. 6**, but may not be limited thereto, and may provide shredded food waste to multiple food waste treating apparatuses 10. Accordingly, the food waste conveying system may include the multiple numbers of screw conveyors 400 corresponding to number of the food waste treating apparatuses 10. The food waste treating apparatus 10 includes a torque transferring structure connected both ends of a rotating shaft and configure to transmit torque from a motor.

The food waste treating system may primarily crush food waste into small sizes through the food waste crusher 300 and deliver shredded food waste to the multiple food waste treating apparatuses 10 through the screw conveyors 400. The food waste treating apparatus 10 in the present embodiment is normally much larger than the human height in size, so manual input of food waste inside the food waste treating apparatus 10 by a user is not feasible and the conveying food waste system is intrinsically necessary. Herein, food waste is also shredded into small particles through the food waste crusher 300 before delivering to the food waste treating apparatus 10, the surface contact between shredded food waste and the microorganism inside the housing 100 of the food waste treating apparatuses 10 is increased therein and the efficiency of decomposition process is greatly improved. Further, shredded food waste can be delivered to the multiple food waste treating apparatuses 10 through a single food waste conveying system, it is possible to reduce manufacturing costs and to improve the onsite space utilization.

Referring to **FIG. 7**, the food waste crusher 300 may include a crusher inlet opening 310 where food waste is inserted, a crushing unit 320 configured to fragment food waste inserted through the crusher inlet opening 310, and a crusher outlet 330 where shredded food waste crushed by the crushing unit 320 is discharged.

In other words, the food waste inserted through the crusher inlet opening 310 may be crushed into a predetermined small size by the crushing unit 320. Further, shredded food waste may be taken to the multiple screw conveyors 400 through the crusher outlet 330 and then delivered to the food waste treating apparatuses 10 respectively.

Referring to **FIG. 8**, the crushing unit 320 may include a pair of crusher rotating shafts 325 provided in parallel to each other, a pair of saw tooth units 326 provided at outer diameter of the pair of crusher rotating shafts 325 respectively and configured to engage each other to crush food waste, and a crusher motor 321 configured to rotate the pair of saw tooth units 326.

The crushing unit 320 may further include a crusher chain 322 connected to the crusher motor 321, a first crusher sprocket 323 rotated by the crusher chain 322 and attached to an end of the crusher rotating shaft 325, and a second crusher sprocket 324 linked with the first crusher sprocket 323 and attached to an end of the other crusher rotating shaft 325.

In other words, when the crusher motor 321 rotates, the crusher chain 322 may transfer the rotation to the crusher rotating shaft 325 and first crusher sprocket 323 attached to the crusher rotating shaft 325 may be rotated simultaneously. Further, when the first crusher sprocket 323 is rotated, the second crusher sprocket 324 may be rotated simultaneously. Therefore, when the first crusher sprocket 323 and the second crusher sprocket 324 are rotated, the pair of saw tooth units 326 attached to the outer diameter of the crusher rotating shaft 325 may be rotated in opposite direction to each other, crushing the food waste into small pieces.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims are included in the scope of the present disclosure.

**[EXPLANATION OF REFERENCE NUMERALS]**

| | |
|---|---|
| 10: Food waste treating apparatus | |
| 100: Housing | 110: Food inlet opening |
| 120: Mixing barrel | 130: Drain hole |
| 200: Rotating shaft assembly | |
| 210: Rotating shaft | 221: Supporting bar |
| 222: Mixing blade | |
| 230: Motor | |
| 240: Torque transferring structure | |
| 241: First sprocket | 242: Second sprocket |
| 243: Driving shaft | 244: Driving sprocket |
| 245: Rotating shaft sprocket | 246: Chain |
| 247, 247': Bearing | 248: Supporter unit |
| 249: Coupling | |
| 250: Load cell | 260: Touch screen |
| 300: Food waste crusher | |
| 310: Crusher inlet opening | |
| 320: Crushing unit | |
| 321: Crusher motor | 322: Crusher chain |
| 323: First crusher sprocket | 324: Second crusher sprocket |
| 325: Crusher rotating shaft | 326: Saw tooth unit |
| 330: Crusher outlet port | |
| 400: Screw conveyor | |

## Claims

1. A food waste treating apparatus (10), comprising:
a housing (100) including a food inlet opening (110) on its upper surface; and
a rotating shaft assembly (200) provided within the housing (100) and configured to move food waste within the housing (100),
wherein the rotating shaft assembly (200) is comprised of:
a rotating shaft (210);
a plurality of supporting bars (221) evenly attached and extended from the rotating shaft (210) in a perpendicular direction to the rotating shaft (210);
a plurality of agitating blades (222) provided at each ends of the plurality of supporting bars (221);
a motor (230) configured to supply power to rotate the rotating shaft (210); and
a torque transferring structure (240) connected to both ends of the rotating shaft (210) and configured to transfer torque from the motor (230).

2. The food waste treating apparatus of Claim 1,
wherein the torque transferring structure (240) includes:
a first sprocket (241) attached to a motor shaft;
a second sprocket (242) linked with the first sprocket (241);
a driving shaft (243) where the second sprocket (242) is attached;
driving sprockets (244) attached at both ends of the driving shaft (243) respectively; and
rotating shaft sprockets (245) linked with the driving sprockets (244) and attached at both ends of the rotating shaft (210) respectively.

3. The food waste treating apparatus of Claim 2,
wherein the driving sprocket (244) and the rotating shaft sprocket (245) are linked with each other by a chain (246).

4. The food waste treating apparatus of Claim 2,
wherein the torque transferring structure (240) further includes:
a plurality of bearings (247) provided at both sides of the rotating shaft sprocket (245).

5. The food waste treating apparatus of Claim 2, further comprising:
a supporting unit (248) configured to support the rotating shaft (210) and the driving shaft (243) respectively.

6. The food waste treating apparatus of Claim 2,
wherein the torque transferring structure (240) further includes:
a coupling (249) configured to connect the motor (230) and the first sprocket (241).

7. The food waste treating apparatus of Claim 1, further comprising:
a load cell (250) provided at a lower end of the housing (100) to measure the weight amount of food waste inserted to the housing (100).

8. The food waste treating apparatus of Claim 1, further comprising:
a touch screen (260) provided on an outer surface of the housing (100) and configured to display multiple operation and status, enabling a user to select and run one of the operation modes displayed thereon.

9. A food waste conveying system, comprising:
a food waste crusher (300) configured to break food waste in small pieces;
a plurality of food waste treating apparatuses (10); and
a plurality of screw conveyors (400) configured to deliver shredded food waste through the food waste crusher (300) to the plurality of food waste treating apparatuses (10);
wherein the food waste treating apparatus (10) comprises
a housing (100) including a food inlet opening (110), and
a rotating shaft assembly (200) provided within the housing (100) and configured to move food waste within the housing (100),
wherein the rotating shaft assembly (200) includes a rotating shaft (210) and a torque transferring structure (240) connected to both ends of the rotating shaft (210) and configured to transmit torque from a motor (230) to both ends of the rotating shaft (210).

10. The food waste conveying system of Claim 9,
wherein the food waste crusher (300) includes:
a crusher inlet opening (310) through which food waste is inserted;
a crushing unit (320) configured to fragment food waste inserted through the crusher inlet opening (310); and
a crusher outlet port (330) where shredded food waste crushed by the crushing unit (320) is discharged.

11. The food waste conveying system of Claim 10,
wherein the crushing unit (320) includes:
a pair of crusher rotating shafts (325) provided in parallel to each other;
a pair of saw tooth units (326) provided at outer diameter of the pair of crusher rotating shafts (325) respectively, and configured to engage each other to crush the food waste; and
a crusher motor (321) configured to rotate the pair of saw tooth units (326).

12. The food waste conveying system of Claim 11,
wherein the crushing unit (320) further includes:
a crusher chain (322) connected to the crusher motor (321);
a first crusher sprocket (323) rotated by the crusher chain (322) and attached to an end of the crusher rotating shaft (325); and
a second crusher sprocket (324) linked with the first crusher sprocket (323) and attached to an end of the other crusher rotating shaft (325).

## Patentansprüche

1. Lebensmittelabfallbehandlungsvorrichtung (10), umfassend:
ein Gehäuse (100), das eine Lebensmittel-Einlassöffnung (110) auf seiner oberen Fläche aufweist; und
eine Drehwelle_ÜSnanordnung (200), die innerhalb des Gehäuses (100) vorgesehen und eingerichtet ist, um Lebensmittelabfall innerhalb des Gehäuses (100) zu bewegen,
wobei die Drehwellenanordnung (200) besteht aus:
einer Drehwelle (210);
mehreren Tragstangen (221), die gleichmäßig angebracht sind und sich von der Drehwelle (210) in einer senkrechten Richtung zu der Drehwelle (210) erstrecken;
mehrere Rührschaufeln (222), die an jedem Ende der mehreren Tragstangen (221) vorgesehen sind;
einen Motor (230), der eingerichtet ist, um Energie zuzuführen, um die Drehwelle (210) zu drehen; und
eine Drehmoment-Übertragungsstruktur (240), die mit beiden Enden der Drehwelle (210) verbunden und eingerichtet ist, um ein Drehmoment von dem Motor (230) zu übertragen.

2. Lebensmittelabfallbehandlungsvorrichtung nach Anspruch 1, wobei die Drehmoment-Übertragungsstruktur (240) aufweist:
ein erstes Kettenrad (241), das an einer Motorwelle angebracht ist;
ein zweites Kettenrad (242), das mit dem ersten Kettenrad (241) in Verbindung steht;
eine Antriebswelle (243), wo das zweite Kettenrad (242) angebracht ist;
Antriebskettenräder (244), die jeweils an beiden Enden der Antriebswelle (243) angebracht sind; und
Drehwellenkettenräder (245), die mit den Antriebskettenrädern (244) in Verbindung stehen und jeweils an beiden Enden der Drehwelle (210) angebracht sind.

3. Lebensmittelabfallbehandlungsvorrichtung nach Anspruch 2, wobei das Antriebskettenrad (244) und das Drehwellenkettenrad (245) miteinander über eine Kette (246) in Verbindung stehen.

4. Lebensmittelabfallbehandlungsvorrichtung nach Anspruch 2, wobei die Drehmoment-Übertragungsstruktur (240) ferner aufweist:
mehrere Lager (247), die an beiden Seiten des Drehwellenkettenrads (245) vorgesehen sind.

5. Lebensmittelabfallbehandlungsvorrichtung nach Anspruch 2, ferner umfassend:
eine Trageinheit (248), die eingerichtet ist, um jeweils die Drehwelle (210) und die Antriebswelle (243) zu tragen.

6. Lebensmittelabfallbehandlungsvorrichtung nach Anspruch 2, wobei die Drehmoment-Übertragungsstruktur (240) ferner aufweist:
eine Kopplung (249), die eingerichtet ist, um den Motor (230) und das erste Kettenrad (241) zu verbinden.

7. Lebensmittelabfallbehandlungsvorrichtung nach Anspruch 1, ferner umfassend:
eine Wägezelle (250), die an einem unteren Ende des Gehäuses (100) vorgesehen ist, um die Gewichtsmenge von Lebensmittelabfall zu messen, der in das Gehäuse (100) eingeführt wird.

8. Lebensmittelabfallbehandlungsvorrichtung nach Anspruch 1, ferner umfassend:
einen Berührungsbildschirm (260), der auf einer äußeren Fläche des Gehäuses (100) vorgesehen und eingerichtet ist, um mehrere Betriebe und Status anzuzeigen, wodurch es einem Bediener ermöglicht wird, einen der darauf angezeigten Betriebsmodi auszuwählen und laufen zu lassen.

9. Lebensmittelabfall-Beförderungssystem, umfassend:
eine Lebensmittelabfall-Zerkleinerungsvorrichtung (300), die eingerichtet ist, um Lebensmittelabfall in kleine Stücke zu brechen;
mehrere Lebensmittelabfallbehandlungsvorrichtungen (10); und
mehrere Förderschnecken (400), die eingerichtet sind, um geschredderten Lebensmittelabfall durch die Lebensmittelabfall-Zerkleinerungsvorrichtung (300) an die mehreren Lebensmittelabfallbehandlungsvorrichtungen (10) zu liefern;
wobei die Lebensmittelabfallbehandlungsvorrichtung (10) umfasst:
ein Gehäuse (100), das eine Lebensmittel-Einlassöffnung (110) aufweist, und
eine Drehwellenanordnung (200), die innerhalb des Gehäuses (100) vorgesehen und eingerichtet ist, um Lebensmittelabfall innerhalb des Gehäuses (100) zu bewegen,
wobei die Drehwellenanordnung (200) eine Drehwelle (210) und eine Drehmoment-Übertragungsstruktur (240) aufweist, die mit beiden Enden der Drehwelle (210) verbunden und eingerichtet ist, um ein Drehmoment von einem Motor (230) auf beide Enden der Drehwelle (210) zu übertragen.

10. Lebensmittelabfall-Beförderungssystem nach Anspruch 9, wobei die Lebensmittelabfall-Zerkleinerungsvorrichtung (300) aufweist:
eine Zerkleinerungsvorrichtungs-Einlassöffnung (310), durch die Lebensmittelabfall eingeführt wird;
eine Zerkleinerungseinheit (320), die eingerichtet ist, um durch die Zerkleinerungsvorrichtungs-Einlassöffnung (310) eingeführten Lebensmittelabfall zu fragmentieren; und
eine Zerkleinerungsvorrichtungs-Auslassöffnung (330), von der geschredderter Lebensmittelabfall, der durch die Zerkleinerungseinheit (320) zerkleinert wurde, ausgegeben wird.

11. Lebensmittelabfall-Beförderungssystem nach Anspruch 10, wobei die Zerkleinerungseinheit (320) aufweist:
ein Paar Zerkleinerungsvorrichtungsdrehwellen (325), die parallel zueinander vorgesehen sind;
ein Paar Sägezahneinheiten (326), die jeweils am äußeren Umfang des Paars Zerkleinerungsvorrichtungsdrehwellen (325) vorgesehen und eingerichtet sind, um miteinander in Eingriff zu kommen, um den Lebensmittelabfall zu zerkleinern; und
einen Zerkleinerungsvorrichtungsmotor (321), der eingerichtet ist, um das Paar Sägezahneinheiten (326) zu drehen.

12. Lebensmittelabfall-Beförderungssystem nach Anspruch 11, wobei die Zerkleinerungseinheit (320) ferner aufweist:
eine Zerkleinerungsvorrichtungskette (322), die mit dem Zerkleinerungsvorrichtungsmotor (321) verbunden ist;
ein erstes Zerkleinerungsvorrichtungskettenrad (323), das durch die Zerkleinerungsvorrichtungskette (322) gedreht und an einem Ende der Zerkleinerungsvorrichtungsdrehwelle (325) angebracht ist; und
ein zweites Zerkleinerungsvorrichtungskettenrad (324), das mit dem ersten Zerkleinerungsvorrichtungskettenrad (323) in Verbindung steht und an einem Ende der anderen Zerkleinerungsvorrichtungsdrehwelle (325) angebracht ist.

## Revendications

1. Appareil de traitement des déchets alimentaires (10), comprenant :
un boîtier (100) comprenant une ouverture d'entrée d'aliments (110) sur sa surface supérieure ; et
un ensemble arbre rotatif (200) prévu à l'intérieur du boîtier (100) et configuré pour déplacer des déchets alimentaires à l'intérieur du boîtier (100),
dans lequel l'ensemble arbre rotatif (200) est composé de :
un arbre rotatif (210) ;
une pluralité de barres de support (221) uniformément fixées et étendues depuis l'arbre rotatif (210) dans une direction perpendiculaire à l'arbre rotatif (210) ;
une pluralité de lames d'agitation (222) prévues à chaque extrémité de la pluralité de barres de support (221) ;
un moteur (230) configuré pour fournir de l'énergie pour faire tourner l'arbre rotatif (210) ; et
une structure de transfert de couple (240) connectée aux deux extrémités de l'arbre rotatif (210) et configurée pour transférer le couple du moteur (230).

2. Appareil de traitement des déchets alimentaires selon la revendication 1,
dans lequel la structure de transfert de couple (240) comprend :
un premier pignon (241) fixé à un arbre de moteur ;
un deuxième pignon (242) relié au premier pignon (241) ;
un arbre d'entraînement (243) où le deuxième pignon (242) est fixé ;
des pignons d' entraînement (244) fixés respectivement aux deux extrémités de l'arbre d'entraînement (243) ; et
des pignons d'arbre rotatif (245) reliés aux pignons d'entraînement (244) et fixés respectivement aux deux extrémités de l'arbre rotatif (210).

3. Appareil de traitement des déchets alimentaires selon la revendication 2,
dans lequel le pignon d'entraînement (244) et le pignon d'arbre rotatif (245) sont reliés l'un à l'autre par une chaîne (246).

4. Appareil de traitement des déchets alimentaires selon la revendication 2,
dans lequel la structure de transfert de couple (240) comprend en outre : une pluralité de paliers (247) prévus de part et d'autre du pignon d'arbre rotatif (245).

5. Appareil de traitement des déchets alimentaires selon la revendication 2, comprenant en outre :
une unité de support (248) configurée pour supporter l'arbre rotatif (210) et l'arbre d'entraînement (243) respectivement.

6. Appareil de traitement des déchets alimentaires selon la revendication 2,
dans lequel la structure de transfert de couple (240) comprend en outre :
un accouplement (249) configuré pour connecter le moteur (230) et le premier pignon (241).

7. Appareil de traitement des déchets alimentaires selon la revendication 1, comprenant en outre :
une cellule de charge (250) prévue à une extrémité inférieure du boîtier (100) pour mesurer la quantité de poids des déchets alimentaires insérés dans le boîtier (100).

8. Appareil de traitement des déchets alimentaires selon la revendication 1, comprenant en outre :
un écran tactile (260) prévu sur une surface extérieure du boîtier (100) et configuré pour afficher plusieurs modes de fonctionnement et états, permettant à un utilisateur de sélectionner et d'utiliser l'un des modes de fonctionnement affichés sur celui-ci.

9. Système de transport de déchets alimentaires, comprenant :
un broyeur de déchets alimentaires (300) configuré pour briser les déchets alimentaires en petits morceaux ;
une pluralité d'appareils de traitement de déchets alimentaires (10) ; et
une pluralité de convoyeurs à vis (400) configurés pour délivrer des déchets alimentaires broyés à travers le broyeur de déchets alimentaires (300) à la pluralité d'appareils de traitement des déchets alimentaires (10) ;
dans lequel l'appareil de traitement des déchets alimentaires (10) comprend :
un boîtier (100) comprenant une ouverture d'entrée d'aliments (110), et
un ensemble arbre rotatif (200) prévu à l'intérieur du boîtier (100) et configuré pour déplacer des déchets alimentaires à l'intérieur du boîtier (100),
dans lequel l'ensemble arbre rotatif (200) comprend un arbre rotatif (210) et une structure de transfert de couple (240) connectée aux deux extrémités de l'arbre rotatif (210) et configurée pour transmettre le couple d'un moteur (230) aux deux extrémités de l'arbre rotatif (210).

10. Système de transport de déchets alimentaires selon la revendication 9,
dans lequel le broyeur de déchets alimentaires (300) comprend :
une ouverture d'entrée de broyeur (310) à travers laquelle des déchets alimentaires sont insérés ;
une unité de broyage (320) configurée pour fragmenter les déchets alimentaires insérés par l'ouverture d'entrée de broyeur (310) ; et
un orifice de sortie de broyeur (330) où les déchets alimentaires déchiquetés broyés par l'unité de broyage (320) sont évacués.

11. Système de transport de déchets alimentaires selon la revendication 10,
dans lequel l'unité de broyage (320) comprend :
une paire d'arbres rotatifs de broyeur (325) prévus parallèlement l'un à l'autre ;
une paire d'unités à dents de scie (326) prévues au niveau du diamètre extérieur de la paire d'arbres rotatifs de broyeur (325) respectivement, et configurées pour venir en prise l'une avec l'autre pour broyer les déchets alimentaires ; et
un moteur de broyeur (321) configuré pour faire tourner la paire d'unités à dents de scie (326).

12. Système de transport de déchets alimentaires selon la revendication 11,
dans lequel l'unité de broyage (320) comprend en outre :
une chaîne de broyeur (322) reliée au moteur de broyeur (321) ;
un premier pignon de broyeur (323) mis en rotation par la chaîne de broyeur (322) et fixé à une extrémité de l'arbre rotatif de broyeur (325) ; et
un deuxième pignon de broyeur (324) relié au premier pignon de broyeur (323) et fixé à une extrémité de l'autre arbre rotatif de broyeur (325).
